# EUROPEAN PATENT APPLICATION

(11) **EP 2 117 211 A1**
(43) Date of publication of application: **11.11.2009**
(21) Application number: 08748541.3
(22) Date of filing: 09.05.2008
(51) Int. Cl.: H04M 3/42

(54) **A DEVICE, A METHOD AND A SYSTEM FOR REALIZING HANGUP NOTIFICATION SERVICE**

(30) Priority: 30.05.2007 CN 200710074670
(71) Applicant: Huawei Technologies Co., Ltd., Longgang District, Shenzhen Guangdong 518129 (CN)
(72) Inventor: LIU, Yaodong, Guangdong 518129 (CN); CAI, Yongfeng, Guangdong 518129 (CN)
(74) Representative: Thun, Clemens
(86) International application number: PCT/CN2008/070923
(87) International publication number: WO 2008/145041

(57) **Abstract**

A method, a system and a device for realizing hangup notification service are provided. The method includes the following steps: during a conversation between a calling party and a called party, obtaining, by a switch device, hangup notification service information subscribed by a non-hangup user and/or a hangup user after one user party hangs up (11); connecting to a notification service platform according to the hangup notification service information (12); and playing, by the notification service platform, user-subscribed notification information for the non-hangup user (13). A system and a device for realizing notification service are provided in the present invention accordingly. Through the present invention, a user may establish individual profile by subscribing individualized notification information, and it is convenient for the user to set dynamic information for notifying the opposite user party.

## Description

### FIELD OF THE INVENTION

The present invention relates to communication field, and more particularly to a device, a method and a system for realizing hangup notification service.

### BACKGROUND

In the current communication field, during a conversation between a calling party and a called party, if any one user party, such as the calling party, hangs up, a calling switch transmits a Release (REL) message to a called switch after detecting the calling party's hangup. After receiving the REL message transmitted from the calling switch, the called switch transmits a howler tone to a non-hangup user so as to prompt the non-hangup user to hang up. The non-hangup user will hear the tooting howler tone.

During the development of the present invention, the inventor has found the following disadvantages in the related art: the tone heard by the non-hangup user is monotonous and can not be adjusted according to a user's individualized information.

### SUMMARY

An aspect of the present invention provides a method for realizing hangup notification service, including: during a conversation between a calling party and a called party, obtaining, by a switch device, hangup notification service information subscribed by a non-hangup user and/or a hangup user after one user party hangs up; and instructing a notification service platform to play user-subscribed notification information for the non-hangup user. Through the aspect, a user is provided with a hangup notification service.

An aspect of the present invention further provides a device for realizing hangup notification service, including: an acquisition unit, configured to obtain hangup notification service information subscribed by a user; and a transmission unit, configured to provide the hangup notification service information including a hangup notification service access code subscribed by the user to a switch device, and instruct the switch device to connect to a notification service platform according to the hangup notification service access code. Through the device for realizing hangup notification service, a user-subscribed hangup notification service is controlled and managed.

An aspect of the present invention further provides a system for realizing hangup notification service, including: a switch device, configured to connect to a conversation channel between a calling party and a called party, obtain hangup notification service information subscribed by a non-hangup user and/or a hangup user after one user party hangs up, and connect to a notification service platform according to the hangup notification service information; and a notification service platform, configured to play user-subscribed notification information for the non-hangup user according to the hangup notification service information. Through the system, a user is provided with a hangup notification service.

An aspect of the present invention further provides a service control device, including: an acquisition unit, configured to obtain hangup notification service information subscribed by a user; and a transmission unit, configured to provide the hangup notification service information including a hangup notification service access code subscribed by the user to a switch device, and instruct the switch device to connect to a notification service platform according to the hangup notification service access code. Through the control device, a user-subscribed hangup notification service is managed.

An aspect of the present invention further provides a notification service platform, including: a receive unit, configured to receive hangup notification service information transmitted by a switch device; a notification information acquisition unit, configured to obtain notification information according to the received hangup notification service information; and a play unit, configured to play notification information for a user. The notification service platform may play colorful notification information for users, and a user may establish individual profile by subscribing to individualized notification information.

With the above-mentioned aspects of the present invention, the pleasure in a conversation between users may be improved, and it is convenient for a user to set dynamic information for notifying the opposite user party. A user may establish individual profile by subscribing to individualized notification information.

### BRIEF DESCRIPTION OF THE DRAWINGS

Fig. 1 is a schematic flowchart of a method for realizing hangup notification service according to an aspect of the present invention;

Fig. 2 is a schematic configuration diagram of the first system aspect according to the present invention;

Fig. 3 is a schematic signaling flowchart of the first method aspect in which a calling party subscribes to a hangup notification service according to the present invention;

Fig. 4 is a schematic signaling flowchart of the second method aspect in which a calling party subscribes to a hangup notification service according to the present invention;

Fig. 5 is a schematic signaling flowchart of the third method aspect in which a calling party subscribes to a hangup notification service according to the present invention;

Fig. 6 is a schematic signaling flowchart of a method aspect in which a called party subscribes to a hangup notification service according to the present invention;

Fig. 7 is a schematic configuration diagram of the second system aspect according to the present invention;

Fig. 8 is a schematic signaling flowchart of the fourth method aspect in which a calling party subscribes to a hangup notification service according to the present invention;

Fig. 9 is a schematic configuration diagram of the third system aspect according to the present invention;

Fig. 10 is a schematic signaling flowchart of the fifth method aspect in which a calling party subscribes to a hangup notification service according to the present invention;

Fig. 11 is a schematic configuration diagram of a service control device aspect according to the present invention; and

Fig. 12 is a schematic configuration diagram of a notification service platform aspect according to the present invention.

### DETAILED DESCRIPTION

To make the technical solution and advantages of the aspects of the present invention clearer, specific implementations of the technical solution and corresponding beneficial effects of the aspects of the present invention will be described in detail below in connection with the accompanying drawings.

At present, during a conversation between a calling party and a called party, when one party hangs up, the non-hangup party hears a busy tone played by the system. In the aspects of the present invention, through providing hangup notification service to users, a user may play hangup notification information for the opposite user party after he hangs up, or may hear the notification information subscribed by himself after the opposite user party hangs up. The user-subscribed notification information may be individualized ring tone, news, weather forecast, traffic information, presence information, user's personal dynamic information and billing information of the current conversation, or any combination of the above information. This improves the pleasure in the conversation between the users, and it is convenient for a user to set dynamic information for notifying the opposite user party. A user may establish individual profile by subscribing to individualized notification information, and the non-hangup user's experience may be improved in the case that the conversation is terminated suddenly due to poor network signals or other reasons. The aspects of the present invention may be applied in a fixed network, Global System for Mobile Communications (GSM), Code-Division Multiple Access (CDMA) network and Next Generation Network (NGN) network. The aspects of the present invention may also be applied in IP Multimedia Subsystem (IMS) field.

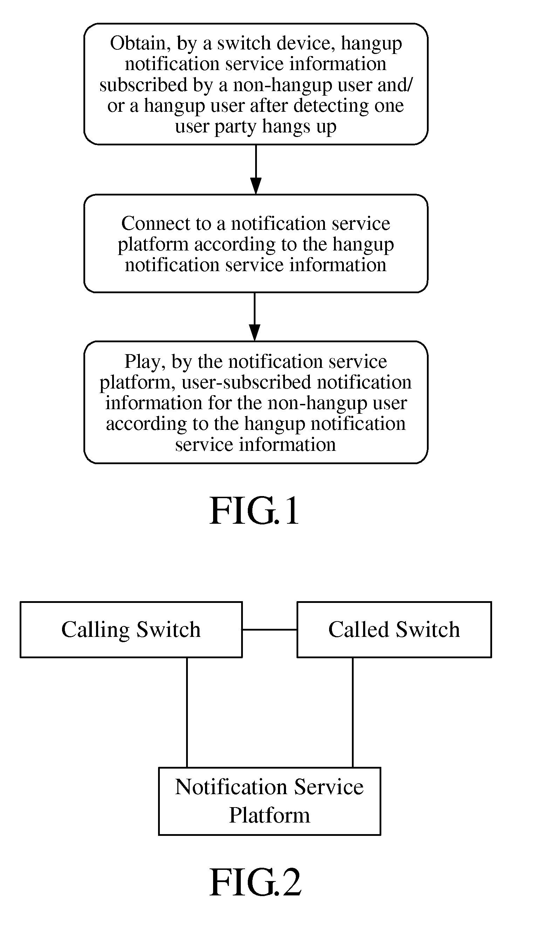

An aspect of the present invention provides a method for realizing hangup notification service. As shown in Fig. 1 which is a schematic flowchart of a method for realizing hangup notification service according to an aspect of the present invention, the method for realizing hangup notification service includes the following steps.

During a conversation between a calling party and a called party, a switch device obtains hangup notification service information subscribed by a non-hangup and/or a hangup user after one user party hangs up, and connects to a notification service platform according to the hangup notification service information.

The notification service platform plays user-subscribed notification information for the non-hangup user according to the hangup notification service information.

In the aspect, the switch device may be a calling switch device or a called switch device. The user-subscribed notification information of the hangup notification service may be individualized ring tone, news, weather forecast, traffic information, presence information, user's personal dynamic information and billing information of the current conversation, or any combination of the above information. The information may be in a format of voice, text or video. The notification service platform may obtain the information according to the user's subscription from a server providing the information, and convert the format of the information into a format supported by user terminals or convert text information into voice information.

A schematic configuration diagram of the first system aspect according to the present invention is shown in Fig. 2. The system aspect is a hangup notification service system applied in a fixed telephone switch network, and includes a calling switch, a called switch and a notification service platform. In the system aspect, the calling switch and the called switch are configured to establish a call connection, record user information and service access code of a hangup notification service, and route to the notification service platform according to the service access code after one party of the communicating users hangs up, in which the service access code is used for call routing. The notification service platform plays notification information for a non-hangup user. Therefore, in the aspect, the user-subscribed hangup notification service is registered in a switch, an identification indicating that the hangup notification service is subscribed and a service routing number of the hangup notification service are added into user attribute information, and the switch provides the notification service to the user according to the user-subscribed information.

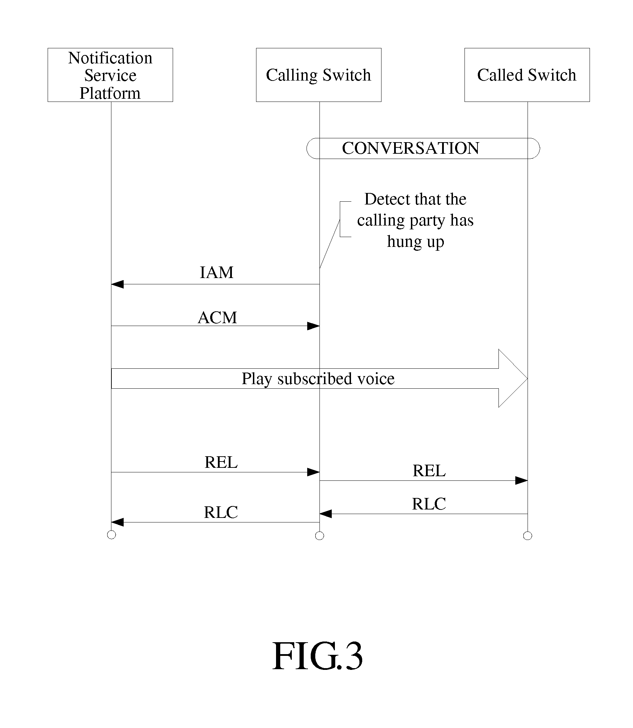

Next, taking the case that a calling party subscribes to a hangup notification service as an example, the operating principle of the first system aspect will be explained in connection with Fig. 3 which is a schematic flowchart of the first method aspect in which a calling party subscribes to a hangup notification service according to the present invention. The calling party has registered hangup notification service in a calling switch. The calling party and a called party are connected normally for a conversation. After the calling party hangs up, the calling switch detects that the calling party has hung up, obtains hangup notification service information subscribed by the calling party, and determines that notification information needs to be played for the called party. Then the calling switch connects to a notification service platform via an Initial Address Message (IAM) according to a hangup notification service routing number. The notification service platform returns an Address Complete Message (ACM) to the calling switch and plays the notification information for the called party. After the play of the notification information is completed, the notification service platform transmits a REL message to the calling switch to release the connection. The calling switch transmits the REL message to the called switch. The called switch transmits a Release Complete (RLC) message to the calling switch. The calling switch transmits the RLC message to the notification service platform, and then the call is terminated. In the system aspect, if neither the calling party nor the called party has subscribed a hangup notification service, the calling switch will implement a normal procedure, i.e. transmit the REL message directly to the called switch to release resources.

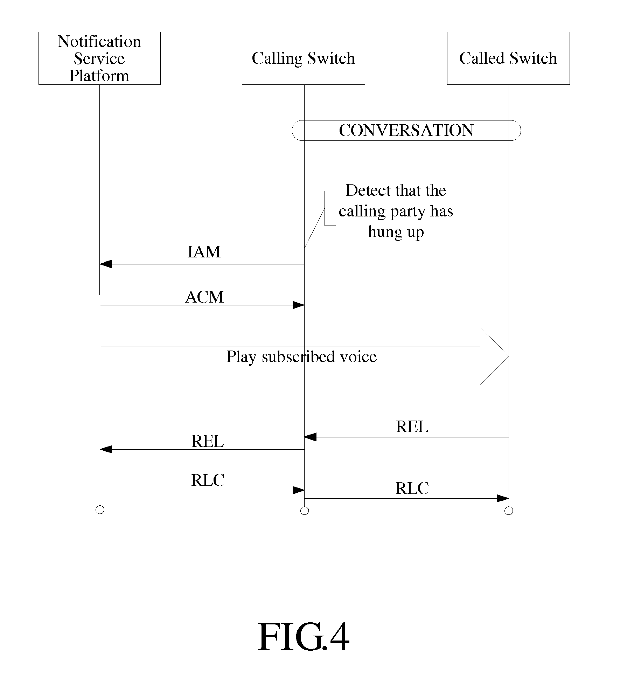

In the aspect, as shown in Fig. 4 which is a schematic signaling flowchart of the second method aspect in which a calling party subscribes to a hangup notification service according to the present invention, if a called party hangs up before the play of notification information is completed, and a called switch detects that the called party has hungup, the called switch transmits a REL message to a calling switch. The calling switch transmits the REL message to a notification service platform. The notification service platform transmits an RLC message to the calling switch. The calling switch transmits the RLC message to the called switch, and then the call is terminated.

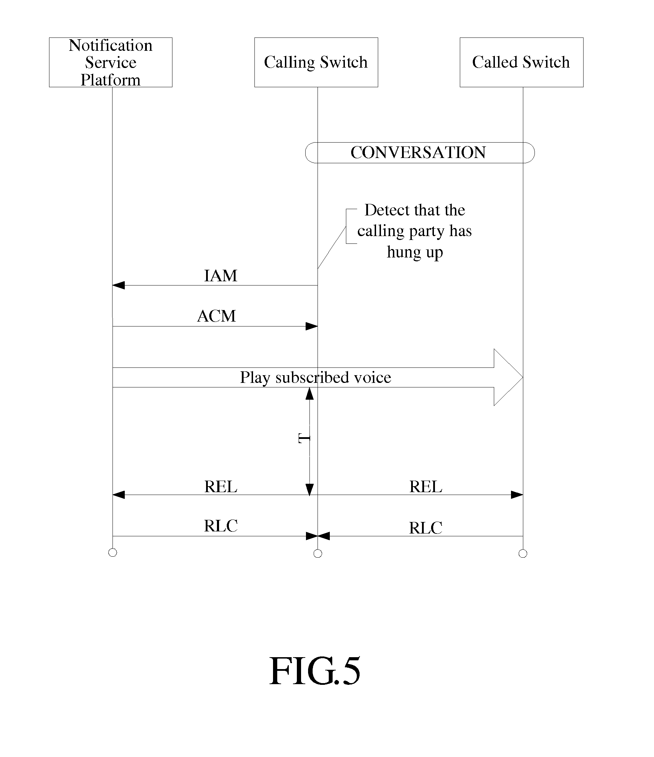

In the aspect, as shown in Fig. 5 which is a schematic signaling flowchart of the third method aspect in which a calling party subscribes to a hangup notification service according to the present invention, a calling switch may set the maximum play duration T for the notification service. When a notification service platform plays notification information for a duration longer than the maximum play duration T, the calling switch actively releases corresponding resources. The calling switch transmits a REL message to the notification service platform. The notification service platform transmits an RLC message to the calling switch. The calling switch transmits the REL message to a called switch. The called switch transmits the RLC to the calling switch, and then the call is terminated.

In the above-mentioned aspect, the calling party subscribes to a hangup notification service. The notification information played for the called party after the calling party hangs up may be ring tone, news, weather forecast, traffic information, presence information, user's personal dynamic information and billing information of the current conversation, or any combination of the above information. Further, the calling party may set different notification information for different users, e.g. set news as the notification information for user A and set billing information of the conversation as the notification information for user B. A user may subscribe to individualized ring tone that may also be voice recorded by the user himself. If the user-subscribed notification service is billing information of the current conversation, the notification service platform may obtain the user's conversation billing information from a billing system, or the billing system or a switch device may deliver the conversation billing information to the notification service platform. The notification service platform may convert the conversation billing information into voice information for playing for the user.

The hangup notification service subscribed by the calling party may also be subscribed by the calling party himself. After the called party hangs up, the called switch detects that the called party has hung up and notifies the calling switch. After learning that the calling party is the user who has subscribed the hangup notification service, the calling switch may connect to the notification service platform according to the service access code. The notification service platform plays the notification information for the calling party. The notification information may be various, such as individualized ring tone, news, weather forecast, traffic information, presence information, user's personal dynamic information and billing information of the current conversation, or any combination of the above information.

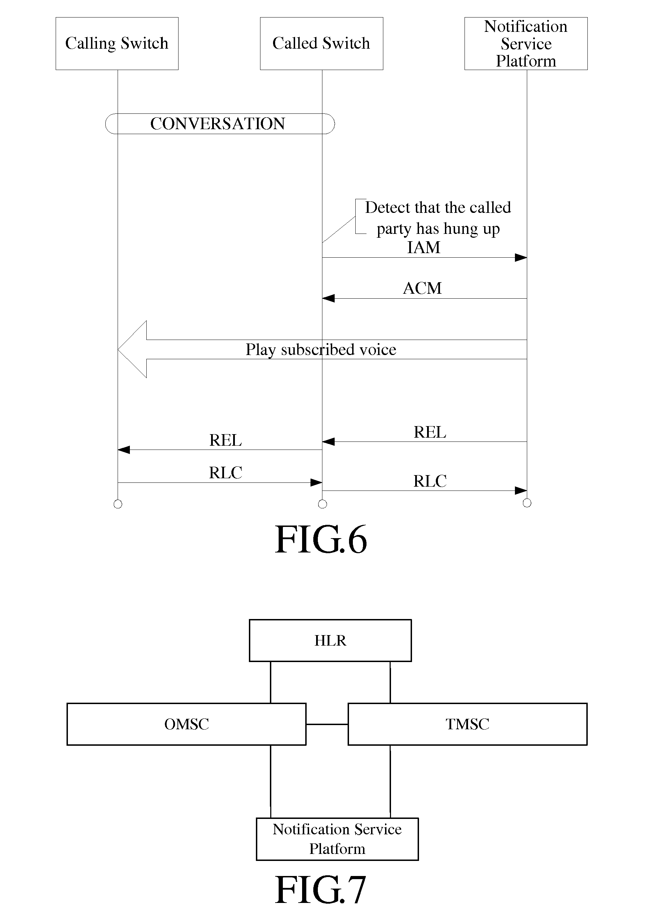

Similarly, a called party may subscribe to a hangup notification service. The called party registers subscription information in a called switch. The procedure of playing notification information is shown in Fig. 6 which is a schematic signaling flowchart of a method aspect in which a called party subscribes to a hangup notification service according to the present invention. A calling party and the called party are connected normally for a conversation. After the called party hangs up, the called switch detects that the called party has hung up, obtains hangup notification service information subscribed by the called party, and determines that notification information needs to be played for the calling party. Then the called switch connects to a notification service platform via an IAM according to a hangup notification service routing number. The notification service platform returns an ACM to the called switch, and plays the notification information for the calling party. After the play of the notification information is completed, the notification service platform transmits a REL message to the called switch to release the connection. The called switch transmits the REL message to a calling switch. The calling switch transmits an RLC message to the called switch. The called switch transmits the RLC message to the notification service platform, and then the call is terminated. In the aspect, the called switch may set the maximum play duration T for the notification service. When the notification service platform plays the notification information for a duration longer than the maximum play duration T, the called switch actively releases corresponding resources. In the aspect, if the calling party hangs up before the play of the notification information is completed, the call processing procedure is substantially identical as the processing procedure in the above-mentioned aspect in the case that the called party hangs up before the play of the notification information is completed, which is not repeatedly described here.

In the above-mentioned aspect, if both the calling party and the called party subscribe to a hangup notification service, the notification information to be played may be selected according to a priority set by the calling party or the called party, or the notification information to be played may be selected according to a default priority in a local switch. Therefore, the calling party and the called party may subscribe to a hangup notification service flexibly. Taking the above-mentioned aspect as an example, when both the calling party and the called party subscribe to a hangup notification service, after the calling party hangs up, the calling switch obtains the hangup notification service information subscribed by the calling party and the called party, and determines a hangup notification service to be provided to the called party according to a hangup notification service priority set by the non-hangup user (i.e. the called party). Here, if the called party sets a preference for the calling party's subscription, the calling switch connects to the notification service platform according to the hangup notification service information subscribed by the calling party. If the called party sets a preference for the called party's subscription, the calling switch or the called switch may connect to the notification service platform according to the hangup notification service information subscribed by the called party. The hangup notification service information includes a hangup notification service access code, according to which a switch device connects to the notification service platform. The notification service platform plays the user-subscribed notification information for the called party according to the hangup notification service information.

Furthermore, in the above-mentioned aspect, the calling party and the called party may belong to the same switch. During the connection procedure, this reduces interexchange signaling between switches, and notification services conducted by the switches are substantially identical.

A schematic configuration diagram of the second system aspect according to the present invention is shown in Fig. 7. The system aspect is a hangup notification service system applied in mobile switching network, and includes an Originating Mobile Switching Center (OMSC), a Home Location Register (HLR), a Terminating Mobile Switching Center (TMSC) and a notification service platform. The HLR records user information and service access code of a hangup notification service. When a user performs location registration, the user information and service access code of the hangup notification service may be stored in the OMSC. A calling party calls a called party. The call is connected to the OMSC. The OMSC and TMSC establish a conversation channel between the calling party and the called party. The calling party and the called party have a conversation. After one user party in the conversation hangs up, the mobile switching center connects to the notification service platform according to the service access code, and the notification service platform plays notification information for the non-hangup user.

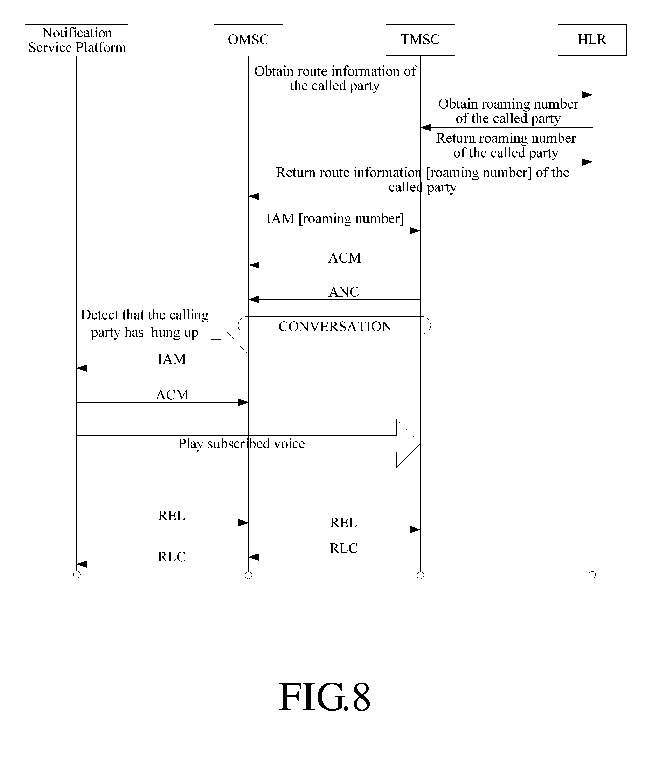

Next, taking the case that a calling party subscribes to a hangup notification service as an example, the operating principle of the second system aspect will be explained in connection with Fig. 8, which is a schematic flowchart of the fourth method aspect in which a calling party subscribes to a hangup notification service according to the present invention. The calling party has registered a hangup notification service in an HLR. The calling party and a called party are connected normally for a conversation. After the calling party hangs up, an OMSC detects that the calling party has hung up, obtains hangup notification service information subscribed by the calling party, and determines that notification information needs to be played for the called party. Then the OMSC connects to a notification service platform according to a hangup notification service routing number. The notification service platform plays the notification information for the called party. After the play of the notification information is completed, the notification service platform releases the connection, and then the call is terminated.

In the aspect, if the called party hangs up before the play of the notification information is completed, a TMSC detects that the called party has hungup, and then transmits a REL message to the OMSC. The OMSC transmits the REL message to the notification service platform. The notification service platform transmits an RLC message to the OMSC. The OMSC transmits the RLC message to the TMSC, and then the call is terminated.

Similarly, in the aspect, the OMSC may set the maximum play duration T for the notification service. When the notification service platform plays the notification information for a duration longer than the maximum play duration T, the OMSC actively releases corresponding resources. The OMSC transmits a REL message to the notification service platform. The notification service platform transmits an RLC message to the OMSC. The OMSC transmits the REL message to the TMSC. The TMSC transmits the RLC message to the OMSC, and then the call is terminated.

In the above-mentioned aspect, the calling party subscribes to a hangup notification service. The notification information played for the called party after the calling party hangs up may be ring tone, news, weather forecast, traffic information, presence information, user's personal dynamic information and billing information of the current conversation, or any combination of the above information. A user may establish individual profile by subscribing to individualized voice, and the non-hangup user's experience may be improved in the case that network signals are poor or the conversation is terminated suddenly.

In the above-mentioned aspect, if both the calling party and the called party subscribe toa hangup notification service, the notification information to be played may be selected according to a priority set by the calling party or the called party, or the notification information to be played may be selected according to a default priority in a local switch. The calling party and the called party may set the hangup notification service information flexibly. The system's interexchange signaling processing is substantially identical as that in the above-mentioned system aspect, which is not repeatedly described here. In the above-mentioned aspect, the calling party and the called party may belong to the same switch. During the connection procedure, this reduces interexchange signaling between switches, and notification services conducted by the switches are substantially identical.

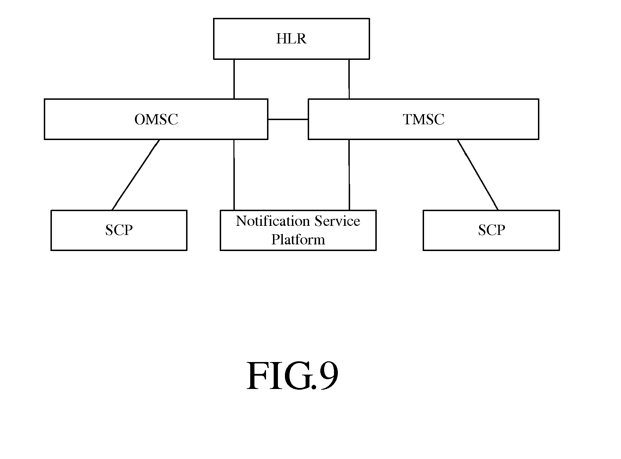

A schematic configuration diagram of the third system aspect according to the present invention is shown in Fig. 9. The system aspect is a hangup notification service system applied in mobile switching network, and includes an OMSC, an HLR, a Service Control Point (SCP), a TMSC and a notification service platform. The HLR records a user's CAMEL subscription information. The SCP records user information and service access code of a hangup notification service. During a conversation between a calling party and a called party, when one user party hangs up, the mobile switching center reports a hangup event to the SCP, and connects to the notification service platform according to the service access code of the hangup notification service returned from the SCP. The notification service platform plays notification information for the user.

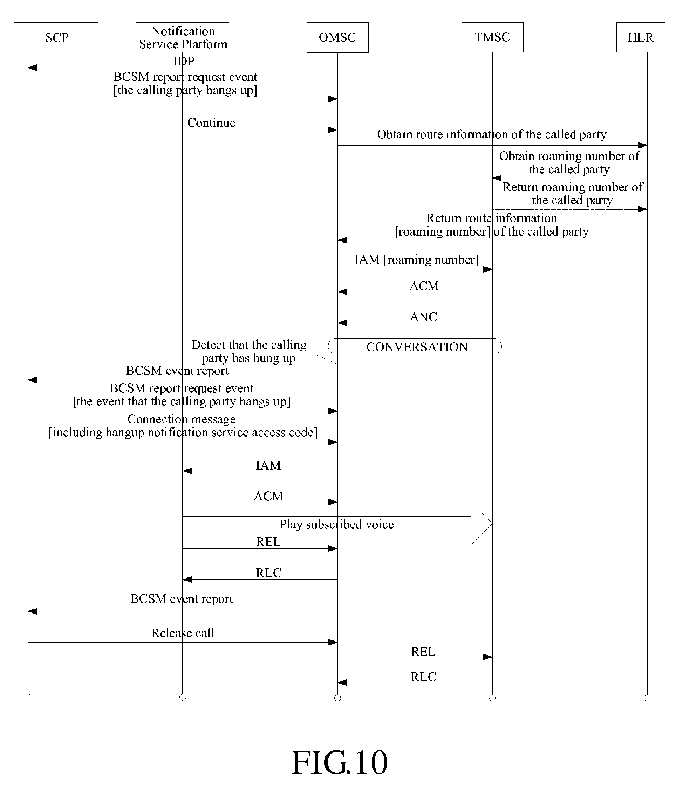

Next, taking the case that a calling party subscribes to a hangup notification service as an example, the operating principle of the third system aspect will be explained in connection with Fig. 10 which is a schematic flowchart of the fifth method aspect in which a calling party subscribes to a hangup notification service according to the present invention. The calling party has registered a hangup notification service in an SCP. The calling party dials a called number. An OMSC transmits an Initial Detection Point (IDP) message for triggering intelligent service to the SCP according to the user's CAMEL subscription message. The SCP determines that the calling party has registered the hangup notification service, transmits a BCSM report request event including a hangup instruction (O_Disconnect) to the OMSC, and transmits a CONTINUE message to the OMSC to instruct the OMSC to continue the call connection. The OMSC obtains routing information of the called party from an HLR. The HLR requests a roaming number of the called party from a TMSC. The TMSC returns the roaming number of the called party to the HLR. The OMSC connects the call to the called party to establish a channel according to the roaming number of the called number returned from the HLR. Then the calling party and the called party have a conversation. After the calling party hangs up, the OMSC detects a hangup event and transmits a BCSM event report indicating that the calling party has hung up to the SCP according to the hangup instruction event configured by the BCSM report request event transmitted by the SCP. The SCP transmits a BCSM report request event including a hangup instruction (O_Disconnect) to the OMSC again. Meanwhile, the SCP transmits a CONNECT message to the OMSC, in which the CONNECT message includes a hangup notification service access code as well as information such as the called number. The OMSC connects to a notification service platform according to the hangup notification service access code. The notification service platform plays user-subscribed notification information for the called party according to the user-subscribed hangup notification service information. The notification service platform transmits a REL message to the OMSC after the play of the notification information is completed. The OMSC transmits an RLC message to the notification service platform, and transmits a BCSM event report indicating that the calling party has hung up to the SCP according to the new BCSM report request event transmitted by the SCP. The SCP delivers a Release Call (RC) message, and then the call is terminated.

In the aspect, the SCP may set the maximum play duration T for the notification service. When the notification service platform plays the notification information for a duration longer than the maximum play duration T, the SCP delivers an RC message to the OMSC for instructing the OMSC to release the call. The OMSC transmits a REL message to the notification service platform. The notification service platform transmits a RLC message to the OMSC. The OMSC transmits the REL message to the TMSC. The TMSC transmits an RLC message to the OMSC, and then the call is terminated.

In the aspect, if the called party hangs up before the play of the notification information is completed, the TMSC detects that the called party has hungup, and then transmits a REL message to the OMSC. The OMSC transmits the REL message to the notification service platform. The notification service platform transmits an RLC message to the OMSC. The OMSC transmits the RLC message to the TMSC, and then the call is terminated.

An aspect of the present invention also provides a device for realizing hangup notification service, including: a storage unit configured to store hangup notification service information subscribed by a user (or obtain the hangup notification service information subscribed by the user in other manners); and a transmission unit configured to provide the hangup notification service information subscribed by the user, which includes a hangup notification service access code, to a switch device, and instruct the switch device to connect to a notification service platform according to the hangup notification service access code. The device may be configured in a switch device, an HLR or an SCP.

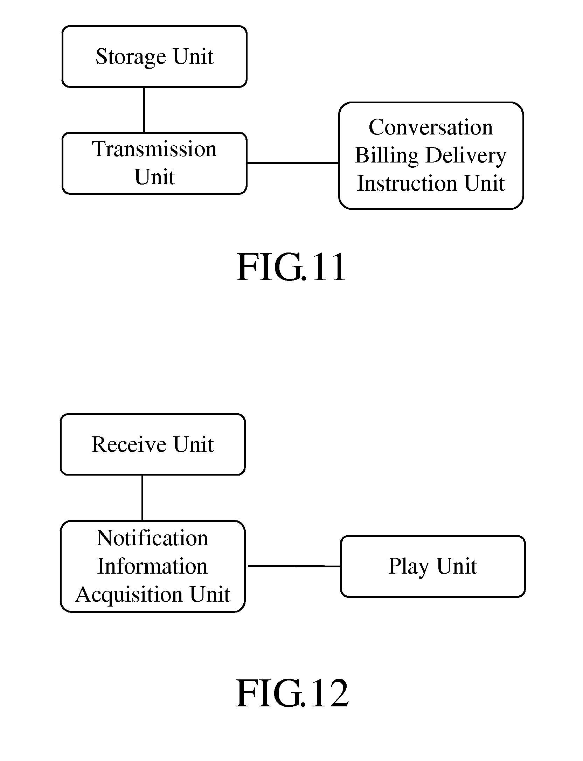

An aspect of the present invention also provides a service control device with the function of realizing hangup notification service. As shown in Fig. 11 which is a schematic configuration diagram of a service control device aspect according to the present invention, the service control device includes: a storage unit configured to store hangup notification service information subscribed by a user; and a transmission unit configured to provide the hangup notification service information subscribed by the user, which includes a hangup notification service access code, to a switch device, and instruct the switch device to connect to a notification service platform according to the hangup notification service access code. The service control device further includes a conversation billing delivery instruction unit configured to instruct the transmission unit to deliver conversation billing information to the switch device when determining that the user-subscribed hangup notification service is a conversation billing notification service. The transmission unit is further configured to deliver the conversation billing information to the switch device.

An aspect of the present invention further provides a notification service platform for providing a hangup notification service to a user. As shown in Fig. 12 which is a schematic configuration diagram of the notification service platform aspect according to the present invention, the notification service platform includes: a receive unit configured to receive hangup notification service information transmitted by a switch device; a notification information acquisition unit configured to obtain notification information according to the received hangup notification service information; and a play unit configured to play the notification information for a user. The notification information acquisition unit obtains individualized ring tone, news, weather forecast, traffic information, presence information, user's personal dynamic information and billing information of the current conversation from a server providing the information according to the user's subscription, and any combination of the above-mentioned information may be played. For example, if a user subscribes to a conversation billing notification service, an SCP may deliver conversation billing information to a notification service platform, or the notification service platform may obtain the conversation billing information from the SCP. The notification service platform further includes a conversion unit configured to convert the format of the notification information obtained by the notification information acquisition unit, e.g. convert text information into audio information. The play unit plays the converted notification information for the user.

Through the above-mentioned aspects of the present invention, after one user party in a conversation hangs up, colorful voice or video information, instead of original busy tone, may be played for a non-hangup user. The voice or video information may be individualized ring tone, news, weather forecast, traffic information, presence information, user's personal dynamic information and billing information of the current conversation, or any combination of the above information. The pleasure in a conversation between users may be improved, and it is convenient for a user to set dynamic information for notifying the opposite user party. A user may establish individual profile by subscribing to individualized voice, and the non-hangup user's experience may be improved in the case that network signals are poor or the conversation is terminated suddenly.

From the description of the above aspects, those skilled in the art would clearly understand that the present invention may be implemented in hardware, or may be implemented by means of software in combination with necessary common hardware platforms. Based on such understanding, the technical solution of the present invention may be embodied in the form of software product. The software product may be stored in a non-volatile storage media, such as CD-ROM, flash memory or mobile hard disk, which includes several instructions for causing a computer device, which may be a personal computer, a server or a network device, to carry out the method of the aspects of the present invention.

The above is the description of specific aspects of the present invention. In particular implementations, the method of the present invention may be appropriately modified to meet specific requirements in specific circumstances. Therefore it is appreciated that the specific aspects according to the present invention are for the purpose of demonstration, but does not intend to limit the protection scope of the present invention.

## Claims

1. A method for realizing notification service, comprising:
during a conversation between a calling party and a called party, obtaining, by a switch device, hangup notification service information subscribed by a non-hangup user and/or a hangup user after one user party hangs up; and
instructing a notification service platform to play user-subscribed notification information for the non-hangup user.

2. The method of claim 1, wherein the hangup notification service information comprises a hangup notification service access code.

3. The method of claim 1, wherein the obtaining, by the switch device, the hangup notification service information subscribed by the non-hangup user and the hangup user and connecting to the notification service platform according to the hangup notification service information further comprises:
obtaining, by the switch device, the hangup notification service information subscribed by the non-hangup user and the hangup user, and determining a hangup notification service to be provided to the non-hangup user according to a hangup notification service priority set by the non-hangup user, wherein the hangup notification service information comprises a hangup notification service access code; and
connecting, by the switch device, to the notification service platform according to the hangup notification service access code.

4. The method of claim 1, wherein the obtaining, by the switch device, the hangup notification service information subscribed by the non-hangup user or the hangup user and connecting to the notification service platform according to the hangup notification service information further comprises:
reporting, by the switch device, a hangup event to a service control point;
after receiving the reported hangup event, returning, by the service control point, the hangup notification service information to the switch device according to the hangup notification service information subscribed by the non-hangup user or the hangup user, wherein the hangup notification service information comprises a hangup notification service access code; and
connecting, by the switch device, to the notification service platform according to the hangup notification service access code.

5. The method of claim 1, wherein the obtaining, by the switch device, the hangup notification service information subscribed by the non-hangup user and the hangup user and connecting to the notification service platform according to the hangup notification service information further comprises:
reporting, by the switch device, a hangup event to a service control point;
after receiving the reported hangup event, determining, by the service control point, a hangup notification service to be provided to the non-hangup user according to a hangup notification service priority set by the non-hangup user, and returning the hangup notification service information to the switch device, wherein the hangup notification service information comprises a hangup notification service access code; and
connecting, by the switch device, to the notification service platform according to the hangup notification service access code.

6. The method of claim 4 or 5, further comprising:
determining, by the service control point, that the user-subscribed hangup notification service is a conversation billing notification service, and returning billing information of the current conversation to the switch device;
connecting, by the switch device, to the notification service platform according to the hangup notification service access code and delivering the billing information; and
playing, by the notification service platform, the billing information for the non-hangup user.

7. The method of claims 1 to 5, wherein the notification information is at least one of the following: individualized ring tone, news, weather forecast, traffic information, presence information, user's personal dynamic information and billing information of the current conversation.

8. A device for realizing hangup notification service, comprising:
an acquisition unit, configured to obtain hangup notification service information subscribed by a user; and
a transmission unit, configured to provide the hangup notification service information subscribed by the user to a switch device, and instruct the switch device to connect to a notification service platform according to the hangup notification service information.

9. The device of claim 8, wherein the device is deployed in a switch device, a home location register or a service control point.

10. A system for realizing hangup notification service, comprising:
a switch device, configured to establish a conversation channel between a calling party and a called party, obtain hangup notification service information subscribed by a non-hangup user and/or a hangup user when one user party hangs up, and connect to a notification service platform according to the hangup notification service information; and
a notification service platform, configured to play user-subscribed notification information for the non-hangup user.

11. The system of claim 10, wherein
the system further comprises a service control point,
the switch device is further configured to report a hangup event to the service control point after the user party hangs up, and
the service control point is configured to, after receiving the reported hangup event, determine a hangup notification service to be provided to the non-hangup user according to a hangup notification service priority set by the non-hangup user, and return the hangup notification service information to the switch device, wherein the hangup notification service information comprises a hangup notification service access code.

12. The system of claim 11, wherein
the service control point is further configured to return billing information of the current conversation to the switch device when determining that the user-subscribed hangup notification service is a conversation billing notification service,
the switch device is further configured to deliver the billing information to the notification service platform, and
the notification service platform is configured to play the billing information for the non-hangup user.

13. A service control device, comprising:
an acquisition unit, configured to obtain hangup notification service information subscribed by a user; and
a transmission unit, configured to provide the hangup notification service information subscribed by the user to a switch device, and instruct the switch device to connect to a notification service platform according to the hangup notification service information.

14. The device of claim 13, wherein
the device further comprises a conversation billing delivery instruction unit configured to instruct the transmission unit to deliver conversation billing information to the switch device when determining that the user-subscribed hangup notification service is a conversation billing notification service, and
the transmission unit is further configured to deliver the conversation billing information to the switch device.

15. A notification service platform, comprising:
a receive unit, configured to receive hangup notification service information transmitted by a switch device;
a notification information acquisition unit, configured to obtain notification information according to the received hangup notification service information; and
a play unit, configured to play notification information for a user.

16. The notification service platform of claim 15, wherein
the notification service platform further comprises a conversion unit configured to convert the notification information obtained by the notification information acquisition unit, and
the play unit is configured to play the converted notification information.

17. The notification service platform of claim 15, wherein the notification information is one of or any combination of the followings: individualized ring tone, news, weather forecast, traffic information, presence information, user's personal dynamic information and billing information of the current conversation.
